# EUROPEAN PATENT APPLICATION

(11) **EP 0 861 804 A1**
(43) Date of publication of application: **02.09.1998**
(21) Application number: 96938469.2
(22) Date of filing: 14.11.1996
(51) Int. Cl.: C01B 31/02, C01B 31/04, H01M 4/58, H01M 4/02, H01M 10/40

(54) **CATHODE MATERIAL FOR LITHIUM SECONDARY BATTERY, PROCESS FOR MANUFACTURING THE SAME, AND SECONDARY BATTERY USING THE SAME**

(30) Priority: 14.11.1995 JP 295462/95
(71) Applicant: OSAKA GAS CO., LTD., Osaka-shi, Osaka-fu 541 (JP); SHARP CORPORATION, Osaka-shi, Osaka 545 (JP)
(72) Inventor: MORITA, Koichi, Osaka 573 (JP); FUJIWARA, Hiromi, Osaka 594 (JP); NAKAGAWA, Yoshiteru, Nara 639-11 (JP); KATSUURA, Masamitsu, Osaka-shi Osaka 554 (JP); MATSUYOSHI, Hiroaki, Osaka 577 (JP); NISHIMURA, Naoto, Nara 639-21 (JP); TSUKUDA, Yoshihiro, Osaka 545 (JP); MINATO, Kazuaki, Osaka 536 (JP); MITATE, Takehito, Nara 635 (JP); YAMADA, Kazuo, Nara 639-21 (JP); YONEDA, Tetsuya, Mie 518-04 (JP)
(74) Representative: Beetz & Partner Patentanwälte
(86) International application number: JP9603344
(87) International publication number: WO9718160

(57) **Abstract**

A carbon material for a lithium secondary battery, in which the edge parts of the crystals of a carbon material which is the core material of the cathode material are partially or entirely coated with a carbon material and crystals have nearly spherical or elliptic shapes. There are also provided a process for manufacturing the carbon material and a lithium secondary battery using the carbon material as a component.

## Description

### TECHNICAL FIELD

The present invention relates to a carbon material and a method for production thereof, in particular, a carbon powder whose surface is coated with ingredients of heavy oil and a method for production thereof. Specifically, the invention relates to a carbon material, useful as material for negative electrode of lithium secondary battery, a method for production thereof and lithium secondary battery using such a carbon material.

### BACKGROUND ART

Recently, miniaturization and weight-saving of electronic equipments, information related equipments and like portable-type equipments (hereinafter "portable equipment") have been progressed significantly, which makes secondary batteries driving said equipments very important parts. Lithium secondary batteries have lightness in weight and high energy density so that lithium secondary batteries are regarded as promising driving power source of portable equipment. Research and development thereof are actively progressed. When lithium metal is used as negative electrode, dendrite formed and grown on metal lithium by repeating a charge and discharge cycle causes an internal short circuit, which makes production of lithium secondary battery difficult. Although use of lithium alloys, such as a lithium aluminium alloy in place of lithium metal is proposed, batteries using the alloy causes segregation of alloy in the course of charge and discharge cycle or deep charge and discharge. Consequently, batteries maintaining sufficient characteristics for a long period of time can not be obtained.

Batteries using carbon materials as host material of negative electrode to utilize an intercalation and deintercalation reaction of lithium ion are proposed, developed and come in practice. Lithium secondary batteries applying carbon materials to a negative electrode is superior in cycle characteristics, safety, etc.

Carbon materials have a variety of structures and forms from graphite to amorphous carbon. Performance of electrode is greatly influenced by physical properties and microstructure thereof formed by hexagonal net face of carbon. A variety of carbon materials whose physical properties and microstructure are specified are, therefore, proposed. Presently used materials for negative electrode of lithium secondary battery are roughly classified into carbon-series materials calcined at about 1,000 °C and graphite-series materials calcined at about 2,800 °C. The former has an advantages of low reactivity with electrolyte leading to difficulty of electrolyte decomposition and a drawback of great change of electric potential with release of lithium ion. In contrast, the latter has an advantage of small change of electric potential with release of lithium ion and a drawback of reaction with electrolyte leading to decomposition of electrolyte and destruction of carbon materials (J. Electrochem. Soc. 117, 222 (1970)). As a result, the latter causes problems of decreased efficiency of charge and discharge, decreased cycle characteristics and decreased safety of battery. It is reported that graphite-series materials may be used, when specific electrolytes are used (J. Electrochem. Soc. 137, 2009(1990)). For the purpose of producing battery, however, limitation of electrolyte has a drawback of restraint of improvement of temperature characteristics and cycle characteristics of battery by the type of electrolyte.

To solve the problems, JP-A-4-368778, JP-A-4-370662, JP-A-5-94838 and JP-A-5-121066 proposed carbon materials produced by coating a surface of graphite particles with low-crystalline carbon. These surface-modified carbon materials are effective to increase battery capacity and to improve cycle characteristics through inhibition of electrolyte decomposition.

According to techniques described in JP-A-4-368778, carbon coating layer formed in gas phase do not cause fusing and aggregation of carbon particles leading to generation of materials with high performance. However, the materials have practical problems in cost and mass production.

JP-A-4-370662, JP-A-5-94838 and JP-A-5-121066 disclose a method of coating carbon in liquid phase which is advantageous in cost and mass production. However, a simple combination of mixing graphite particles and organic compounds in liquid phase with calcination thereof generates fused and aggregated carbon particles which are necessary to be powdered, causing drawbacks of exposure of generated active surface of graphite by powdering fused and aggregated carbon particles, contamination during powdering and complexity of production steps.

### DISCLOSURE OF THE INVENTION

It is a primary object of the invention to obtain a lithium secondary battery which is superior in properties such as cycle characteristics and safety by manufacturing a negative electrode using carbon materials which are free of selectivity and/or restraint with respect to electrolytes, and small in change of electric potential with release of lithium ion.

The inventors conducted extensive research to solve or decrease said prior art problems and found that carbon materials whose core material is uniformly covered with pitch can be produced by dipping particle-like carbon materials to be core material (hereinafter referred to as "core carbon material" or "carbon material to be core material" or simply "core material") into raw material for coat-forming carbon material (for example, tar, pitch and like coal heavy oil or petroleum heavy oil; hereinafter may be referred to as simply "heavy oil etc."), followed by taking specific means to separate core material from heavy oil etc. It is found that the two-layered carbon material particles thus obtained have a spheric or ellipsoidal or similar shape, or a shape that edge parts of carbon crystal are rounded. As a result of measurement by a BET method, it is found that specific surface area of the particles are smaller than core carbon materials before treatment showing that pores concerning specific surface area determined by a BET method are filled in a certain way.

According to the invention, coated carbon material particles characterized in that carbon materials derived from heavy oil etc. are partially or entirely adhered to edge and basal plane of carbon materials to be core material, or, part or whole of the edge and basal plane are coated by the carbon material to be substantially spheric or ellipsoidal shape are provided. With respect to the carbon materials, pores concerning specific surface area determined by a BET method are filled by adhesion or coating of carbon derived from heavy oil etc. thereto, and the carbon materials have a specific surface area of 5m²/g3 or less (preferably about 1-5m²/g).

According to the invention, carbon materials to be core material are highly crystalline graphite material having a mean interplanar spacing (d002) of (002) plane of 0.335-0.340 nm, a thickness of crystallite size in direction of (002) plane (Lc) of at least 10 nm (preferably at least 40 nm), a thickness of crystallite size in direction of (110) plane (La) of at least 10 nm (preferably at least 50 nm) determined by X-ray wide-angle diffractometry.

The carbon material of the invention is characterised by lower crystallinity of carbon materials adhered to or coated on the surface of core material (hereinafter may be refered to as "carbon material for coating formation") than crystallinity of said core material.

The carbon material of the invention has a true specific gravity of 1.50 to 2.26g/cm³.

A lithium secondary battery with high capacity and safety may be obtained by using such carbon material as material of negative electrode of lithium secondary battery.

Said coated carbon material of the invention may be produced as follows. The carbon material to be core material is dipped into tar, pitch and like coal heavy oil or petroleum heavy oil, preferably at about 10-300 °C for coating with heavy oil etc., followed by separating the coated core carbon material from heavy oil, adding an organic solvent to the coated carbon material thus separated for washing preferably at about 10-300 °C, and then drying the material.

Furthermore, the invention provides a method for producing a carbon material comprising calcining for carbonization the carbon material coated with heavy oil etc. obtained according to the above-mentioned procedure and a method for producing a carbon material comprising calcining for graphitization the carbon material coated by heavy oil etc. obtained according to the above-mentioned procedure.

With respect to the invention, the carbon material obtained according to said manufacturing method comprises preferably 10% or less of particles having a diameter of 1 µm or less as volume-based integrated value, wherein said diameter is determined by laser diffraction-type particle size distribution.

According to the invention, tar or pitch modified by removing at least part of primary QI to reduce a remaining primary QI of 3% or less (preferably 1% or less) is preferable.

Furthermore, the invention provides a material for negative electrode of lithium secondary battery characterized in that the material comprises said carbonized or graphitized carbon materials; a negative electrode for lithium secondary battery using the material for negative electrode; and also a non-aqueous lithium secondary battery and a solid electrolyte secondary battery using the negative electrode.

With respect to the invention, "nearly spheric or ellipsoidal" carbon materials include carbon materials free of sharp edge by adhesion of carbon ingredients from heavy oil etc. to edge and basal plane of carbon material to be core material partially or entirely, and shapes of carbon material particles to be core material observed by SEM are maintained. The carbon material may be efficiently produced by the method of the invention free of grinding step. However, the material is not limited to the material produced by the method of the invention.

With respect to the invention, carbon materials whose "pores concerning specific serface area determined by a BET method are coated and filled by raw material for coat-forming carbon material, i.e., carbon materials from tar, pitch and like coal heavy oil or petroleum heavy oil adhered thereon" include carbon materials whose pores concerning specific serface area determined by a BET method is filled at least part thereof by calcined product of raw material for coat-forming carbon material (hereinafter referred to as coat-forming carbon material). Specifically, it is not necessary for the pores to be completely filled by carbon materials derived from heavy oil etc. For example, carbon materials whose adjacent entry ports are filled are included. Such conditions of carbon materials may be confirmed by reduction of specific serface area determined by a BET method .

The carbon materials obtained according to the invention include 4 combinations, i.e., low-crystallinity carbon material + low-crystallinity carbon material; low-crystallinity carbon material + high-crystallinity carbon material; high-crystallinity carbon material + low-crystallinity carbon material; and high-crystallinity carbon material + high-crystallinity carbon material. In all cases, an effect on decrease of electrolyte degradation is exerted.

With respect to the invention, low-crystallinity carbon materials means "carbon which may not be graphite crystals by a treatment necessary for graphitization (eg. treatment at elevated temperature)". Such carbon is usually referred to as hard carbon. On the other hand, high-crystallinity carbon material means "carbon which becomes graphite crystals by a treatment for graphitization". Such carbon is usually referred to as soft carbon.

According to the invention, the following 8 carbon materials are obtained depending on a combination of core material and outer carbon material (which may be referred to as "coat-forming carbon material", "carbon material for surface-modification", " covering material") and on final calcination temperature. Examples are:
(1) carbonized carbon materials comprising core material consisting of low-crystallinity carbon materials and coat-forming carbon materials consisting of low-crystallinity carbon materials;
(2) carbonized carbon materials comprising core material consisting of low-crystallinity carbon materials and coat-forming carbon materials consisting of high-crystallinity carbon materials;
(3) graphitized carbon materials comprising core material consisting of low-crystallinity carbon materials and coat-forming carbon materials consisting of low-crystallinity carbon materials;
(4) graphitized carbon materials comprising core material consisting of low-crystallinity carbon materials and coat-forming carbon materials consisting of high-crystallinity carbon materials;
(5) carbonized carbon materials comprising core material consisting of high-crystallinity carbon materials and coat-forming carbon materials consisting of low-crystallinity carbon materials;
(6) carbonized carbon materials comprising core material consisting of high-crystallinity carbon materials and coat-forming carbon material consisting of high-crystallinity carbon materials;
(7) graphitized carbon materials comprising core material consisting of high-crystallinity carbon materials and coat-forming carbon material consisting of low-crystallinity carbon materials;
(8) graphitized carbon materials comprising core material consisting of high-crystallinity carbon materials and coat-forming carbon material consisting of high-crystallinity carbon materials.

According to the invention, carbon materials for secondary batteries having small specific serface area and good charge and discharge properties may be efficiently produced by coating core material with outer carbon materials. In particular, carbon materials for battery with excellent charge and discharge properties may be obtained by a combination of core material and covering material shown in (5), (6) and (7), and also carbon materials for battery with small specific surface area and improved safety may be obtained by a combination of core material and covering material shown in (1), (2), (3), (4) and (8).

According to the invention, as carbon material to be core material, one or more of particle-like (scaly or massive, fibrous, whisker-like, spheric, shattered etc.) natural graphite, artificial graphite, mesocarbon microbeads, mesophase pitch powder, isotropic pitch powder, resin and carbonized and graphitized products thereof. In particular, scaly and massive natural graphite and artificial graphite which are very inexpensive are preferable from the viewpoint of cost. The carbonized and graphitized products of mesocarbon microbeads (MCMB) having very small specific surface area leading to obtaining material having smaller specific surface area are preferable from the viewpoint of safety of secondary battery, if the products are used as core material.

Carbon materials to be core material are more preferably, 0.335-0.340 nm in mean interplanar spacing (d002) of (002) plane, at least 10nm (preferably at least 40 nm) in thickness of crystallite size in direction of (002) plane (Lc), at least 10 nm (preferably at least 50 nm) in thickness of crystallite size in direction of (110) plane (La) determined by X-ray wide-angle diffractometry, and 0.5 or less (preferably 0.4 or less) in ratio of peak strength around 1360cm⁻¹ to peak strength around 1580cm⁻¹ (hereinafter referred to as R value) determined by Raman spectroscopy with argon laser. When the mean interplanar spacing is more than 0.340 nm, or Lc and La are smaller than 10nm, or R value is more than 0.5, crystallinity of carbon materials is insufficient, and covering carbon materials produced therefrom are not preferable because of insufficient capacity at low electric potential near dissolution and deposition of lithium (0-300mV on the potential vs. Li/Li⁺).

Particle size distribution of carbon materials to be core material is preferably about 0.1-150 µm. Since particle size of final product containing coat-forming carbon material derived from heavy oil etc. substantially depends on particle size of carbon material to be core material, particle size of the final product is substantially specified by particle size of core material. When particle size of core material is less than 0.1 µm, internal short circuit is like ly to be caused through pores of separator of battery, thereby not preferable. On the other hand, when particle size of core material is more than 150 µm, uniformity of electrode, packing density of active material and handling properties during steps of production of electrode are decreased, thereby not preferable.

A weight ratio of coat-forming carbon material derived from heavy oil etc., that is, coat-forming carbon material/(core carbon material + coat-forming carbon material) (hereinafter the ratio is referred to as "covering ratio") is preferably more than 0 and up to 0.3, more preferably 0.01-0.2. In this case, thickness of coat-forming carbon is about 0.01-10 µm, more preferable thichness is about 0.05-5 µm.

When a covering ratio exceeds 0.3, to ensure sufficient capacity of battery produced therefrom becomes difficult. The amount of coat-forming carbon is determined as quinoline soluble matter by solvent analysis of carbon components from heavy oil etc. which cover surface of core material before calcination. Thickness of coat-forming carbon materials is determined by measuring a central particle size (D50) of carbon material to be core material before coating and a central particle size (D50) of pitch-coated carbon materials before calcination with a laser diffraction particle size analyzer, followed by calculating the thichness using the equation : {(particle size after coating) - (particlr size of raw material before coating)}/2 based on the assumption that carbon materials are spheric and that shape of coat layer comprising pitch components is maintained after calcination.

According to the invention, a combination that a coat-forming carbon material on the surface has lower crystallinity than a core carbon material is preferable. Furthermore, a mean interplanar spacing (d002) of (002) plane of 0.335-0.340 nm, a thickness of crystallite size in direction of (002) plane (Lc) of at least 10 nm (preferably at least 40 nm) and a thickness of crystallite size in direction of (110) plane (La) of at least 10 nm (preferably at least 50 nm) determined by X-ray wide-angle diffractometry, and 0.5 or more (preferably about 0.5-1.5) determined by Raman spectroscopy with argon laser are preferable. The interplanar spacing and R value are general index of crystallinity of graphite. From the nature of the measuring methods, X-ray diffractometry reflects bulk properties on determined value of physical property, on the other hand, Raman spectrometry reflects physical properties of surface of material. Specifically, materials which meet said physical properties mean that the materials have high crystallinity as bulk property and low crystallinity as surface thereof. When R value of material after calcination is less than 0.5, selectivity of solvent thereof is not completely removed because of high surface crystallinity. When mean interplanar spacing (d002) is outside of the range of 0.335-0.340 nm, change of electric potential with intercalation and deintercalation of lithium ion become large, thereby not preferable.

A true density of the coated carbon materials with two-layer structure obtained is about 1.50-2.26g/cm³, preferably about 1.8-2.26g/cm³, more preferably about 2.0-2.26g/cm³. When electrode is produced using material with low true density, obtaining battery with high capacity is difficult, since increase of density of active substance in electrode is not possible even if the material has superior properties per unit weight.

Coated carbon materials preferable have a particle size distribution ranging from 0.1 to 150 µm. Within the range of particle size distribution, the material preferably has 10% or less of particles having a diameter of 1 µm or less based on volume thereof. When content of particles with a diameter of 1 µm is more than 10% based on volume thereof, battery properties are decreased due to increase of specific surface area, thereby not preferable.

The coated carbon materials in powder form obtained according to the invention may be subjected to mold fill-out, pressure molding and calcination to obtain a carbon block or a graphite block with homogenous composition.

Examples of raw material of coat-forming carbon material are naphthalene, phenanthrene, acenaphthylene, anthracene, triphenylene, pyrene, chrysene, perylene and like aromatic hydrocarbons, tar or pitch obtaind by polycondensation thereof under pressure with heat, or, tar, pitch, asphalt and oils containing a mixture of said aromatic hydrocarbons as main component which may be derived from petroleum oil and coal oil. In the specification, the raw material of coat-forming carbon material may be simply referred to as "(petroleum or coal) heavy oil, etc.". Furthermore, a variety of thermoset resins may be used as coat-forming raw material, although they are disadvantageous in cost.

When coal heavy oil is used, tar or pitch having 3% or less (preferably 1% or less) of primary QI produced by removing at least part of primary QI which exists in raw material is preferably used. The primary QI means free carbon essentially included in coal tar. The primary QI which exists in raw material inhibits carbonization by calcination and is contaminated in the final product as spheric carbon particles having a diameter of about 1 µm, which may result in introduction of problems in manufacturing process of electrode or decrease of electrode properties.

In general, heavy oil is solid at ordinary room temperature and may be softened and melted by heating. The temperature at which material become softening is referred to as softening point (SP). In order to specify quality of heavy oil, insoluble matter in toluene determined by solvent fractionation with toluene is usually used. Those are typical indications to specify heavy oil. According to the invention, optional indication may be suitably selected to specify quality of heavy oil.

According to the invention, carbon materials to be core material is mixed with heavy oil etc. and stirred. Stirring methods are not specifically limited to, but include mechanically stirring methods using ribbon mixer, screw-type kneader, universal mixer and the like.

Conditions for stirring treatmemnt (temperature and time) are suitably selected in compliance with components of raw material (core material and coat-forming heavy oil) and viscosity of mixture. The conditions are usually about 10-300°C, more preferably about 50-200°C. Time period may be determined to make viscosity of mixture of 5000 Pa·s or less. The thickness of coating layer of coat-forming raw material (which hereinafter may be referred to as simply coating layer) may be controlled by adjusting temperature and time period during a stirring treatment. Higher temperature and/or shorter time lead to a thinner coating layer. In contrast, lower temperature lead to a thicker coating layer. Insufficient stirring causes ununiform coating layer, thereby not preferable. In general, stirring time does not adversely affect properties of product. However, too long stirring time practically decreases productivity, thereby not preferable. Time period may be suitably selected.

Atmosphere during stirring may be under any of atmospheric pressure, application of pressure and reduced pressure. Stirring under reduced pressure improves conformability of core material with heavy oil, thereby preferable.

According to the invention, a plural of mixing and stirring processes may be conducted for the purpose of increased conformability of core material with heavy oil, uniform thickness of coating layer and thicker coating, if necessary. Before the following washing step, the coated core material may be separated and then subjected to washing step.

Subsequently, the carbon materials coated by heavy oil etc. thus obtained is subjected to a washing step. Examples of organic solvent used for washing are toluene, quinoline, acetone, hexane, benzene, xylene, methylnaphthalene, alcohols, solvents from coal oil and petroleum oil. Among them, toluene, quinoline, acetone, benzene, xylene, methanol, gas oil and middle oil from coal and petroleum are more preferable. Heavy oil components in coating layer may be controlled by imparting insoluble matters in washing solvent to coating layer, if organic solvents are suitably selected.

Washing temperature is determined according to finally obtainable coated carbon materials, in particular, properties of surface of coating layer. The temperature is not specifically limited, but is preferably about 10-300 °C.

A proportion of solid matter { = core material + coating layer or impregnation layer (hereinafter simply referred to as coating layer)} and organic solvent during washing is preferably 1 : 0.1-10 by weight ratio.

In the washing step, thickness and remaining heavy oil components of coating layer may be controlled by selecting the type of solvent, washing time and washing temperature. For example, coating layer become thin by a suitable combination of solvent with high detergency and elevating washing temperature. On the other hand, thickness of coating layer become thick by a suitable combination of solvent with low detergency and decrease of washing temperature. Washing time are selected according to said conditions.

Subsequently, separation step of coated carbon materials from organic solvent may be conducted according to centrifugation, press filtration, gravity settling and like techniques. Temperature during separation is usually about 10-300°C.

Drying of separated coated carbon materials is usually conducted about 100-400°C.

The dried coated carbon materials maintain pitch components on the surface of core material particles leading to no fusing and aggregation of particles.

Said coated carbon materials thus dried are then calcined. For carbonization of coated carbon materials, calcination may be carried out at temperature of about 600-2,000°C, preferably 900-1,300°C. For graphitization, calcination may be carried out at temperature of about 2,000-3,000°C, preferably about 2,500-3,000°C.

In order to maintain low crystallinity during calcination at elevated temperature in conditions of carbonization or graphitization, coated heavy oil layer may be subjected to a graphitization retardation treatment using oxidative gases such as oxygen, ozone, carbon monoxide and sulfer oxide before calcination of coated carbon materials, followed by calcined at elevated temperature. For example, highly crystallizable coating layer is formed on highly crystallizable core material, and then oxidation treatment is conducted to convert a coating layer into lower crystallizable carbon. In contrast, highly crystallizable coating layer may be maintained without said oxidation treatment. Such oxidation treatment is conducted before calcination of coated carbon materials. The carbon materials thus obtained is useful as material for negative electrode of lithium secondary battery.

Examples of atmosphere during calcination of coated carbon materials are reducing atmosphere, inert gas flow, inert gas in closed system, vacuum condition and like non-oxidative atmosphere.

Irrespect of calcination temperature, a rate of elevation of temperature is selected from about 1-300°C/hr. Calcination time is about 6 hours to 1 month. Elevation of temperature may be conducted step-by-step in compliance with thichness of coating layer.

Vacuum calcination is preferably carried out with maintaining reduced pressure at a temperature from normal temperature to the highest temperature, or, at a suitable temperature range (preferably more than 500°C). Vacuum calcination is effective to remove surface functional groups of coated carbon materials leading to reduction of non-reversible capacity of battery.

In general, a rapid rate of elevating temperature is expected to improve productivity, and a slow rate of elevating temperature (up to 10°C/hr) is expected to form a densified coating layer. Temperature profile during elevation of temperature and calcination may be in a variety manners such as linear elevation of temperature and stepwise elevation of temperature by holding temperature for a constant period of time.

When the carbon materials thus obtained whose surface is coated by coat-forming carbon materials are applied to negative electrode of lithium secondary battery, decomposition of electrolyte and destruction of carbon materials are inhibited due to low reactivity thereof with organic solvent of elevtrolyte solution. As a result, the battery has advantages of improved charge and discharge efficiency and safety. In general, graphite material has an outside-oriented active edge plane of crystal lattice so that graphite material is likely to react with electrolyte. According to the invention, since the active edge plane of crystal lattice is covered by pitch components whose basal plane, i.e., condensed polycyclic network of carbon, orientates outside, reaction with organic solvent of electrolyte will be inhibited.

According to the invention, since the amount of coating heavy oil on the surface of carbon materials and thickness of coating layer may be controlled by adjusting temperature and time of dipping carbon materials to be core material into heavy oil etc., or, the type of organic solvent and washing conditions (time and temperature) for washing coated carbon materials, carbon materials whose surface is covered by pitch components may be prodused, wherein said pitch components have basal plane, i.e., condensed polycyclic network of carbon, which orientates in a direction of surface of carbon materials.

Furthermore, with respect to the coating of core material surface, orientation of the basal plane in the direction of surface of carbon material is maintained during carbonization or following graphitization of these carbon materials. When the carbon material is applied to negative electrode of lithium secondary battery, since the carbon materials is unlikely to react with organic solvent, decomposition of electrolyte and destruction of carbon materials will not occur. Consequently, superior effects, such as high charge and discharge efficiency of battery and good safety of battery, are exerted.

In order to produce a lithium secondary battery of the invention, particle size of the coated carbon materials thus obtained is optionally adjusted by treatments such as dispersion and classification to be material for electrode.

Electrode is produced by mixing the carbon materials with binders and like known materials, followed by forming active material layer on collector. Binders are not specificalliy limited. Examples of binders are polytetrafluoroethylene, poly(vinylidene fluoride), and like fluorine-containing polymer; polyethylene, polypropylene, and like polyolefins; synthetic rubbers. The amount of binders are usually about 3-50 parts by weight, preferably about 5-20 parts by weight, more preferably about 5-15 parts by weight based on 100 parts by weight of active material. An excessive amount of binder decreases a density of active material, thereby not preferable. A too small amount of binder has an insufficient ability to retain active material in electrode resulting in low stability of electrode, thereby not preferable. Examples of methods for producing an electrode are a method comprising producing paste by mixing active material and a binder, and forming an active material layer on collector with doctor blade or bar coater; and a method comprising adding a mixture of an active material and a binder to a press machine and forming a shaped form by pressing.

Known organic electrolyte solutions, inorganic solid electrolytes, solid polymer electrolytes may be used as electrolyte of lithium secondary battery of the invention.

The organic electrolyte solutions are in particular preferable from the viewpoint of ion conductivity. Examples of solvents for organic electrolyte solutions are propylene carbonate, ethylene carbonate, butylene carbonate, diethyl carbonate, dimethyl carbonate, methylethyl carbonate, γ-butyrolactone, and like esters; tetrahydrofuran, 2-methyltetrahydrofuran and like substituted tetrahydrofuran; dioxolane, diethylether, dimethoxyethane, diethoxyethane, methoxyethoxyethane and like ethers; dimethylsulfoxide, sulfolane, methylsulfolane, acetonitrile, methyl formate and methyl acetate, which may be used singly or a mixture thereof. Examples of electrolytes are lithium perchlorate, lithium borofluoride, lithium hexafluorophosphate, lithium hexafluoroarsenate, sodium trifluoromethanesulfonate, lithium halide, lithium chloroalminate and like lithium salts, which are used singly or in a mixture thereof. Organic electrolyte solutions are prepared by dissolving electrolytes in said solvents. Solvents and electrolytes to prepare electrolyte solution is in no way limited to said examples.

Examples of inorganic solid electrolytes are nitride, halide, oxygen acid salts and phosphorous sulfide compounds of lithium, specifically, Li₃N, LiI, Li₃N-LiI-LiOH, LiSiO₄, LiSiO₄-LiI-LiOH, Li₃PO₄-Li₄SiO₄ and Li₂SiS₃.

Examples of organic solid electrolytes are substances comprising said electrolytes and dissociative polymers, and polymers with ion dissociative group or groups. The dissociative polymers include polyethyleneoxide derivatives and polymers including the derivatives, polypropyleneoxide derivatives and polymers including the derivatives, poly(phosphate ester). Polymer matrix material including said aprotic polar solvents, a mixture of polymer with ion dissociative group or groups and aprotic polar solvent, material prepared by adding polyacrylonitrile to electrolyte may be used. Inorganic solid electrolyte and organic solid electrolyte may be used in combination.

Positive electrode of lithium secondary battery of the invention may be prepared according to conventional manner using lithium-containing oxide as active material of positive electrode. Examples of active material of positive electrode are LiCoO₂, LiNiO₂, LiFeO₂, LiMnO₂, and analogs of the compounds LiₓM_{y}N_{z}O₂ wherein M represents any of Fe, Co, Ni and Mn, N represents a transition metal, 4B group metal or 5B group metal), LiVO₂, which are mixed with electrically-conductive materials, binders and optionally with solid electrolytes to form a positive electrode. A mixing ratio of the materials is about 5-50 parts by weight of electrically-conductive materials, about 1-30 parts by weight of binder based on 100 parts by weight of active material. Such electrically-conductive materials are not specifically limited to, but include known carbon black (acetylene black, thermal black, channel black etc.) and like carbons, graphite powder and metal powder. Binders are not specifically limited to, but include known polytetrafluoroethylene, poly(vinylidene fluoride), and like fluorine-containing polymers; polyethylene, polypropylene, and like polyolefins; and synthetic rubbers. In case that loadings of electrically-conductive material are less than 5 parts by weight or that loadings of binder are more than 30 parts by weight, practical lithium secondary battery can not be produced due to incresased resistance or polarization of electrode and decreased discharge capacity. More than 50 parts by weight (relative ratio thereof is varied according to the type of electrically-conductive materials) of electrically-conductive material result in decreased amount of active material included in electrode leading to decreased discharge capacity of positive electrode. Less than 1 part by weight of binder results in insufficient integrity. More than 30 parts by weight of binder cause a decreased amount of active material included in electrode, an incresased resistance or polarization of electrode and a decreased discharge capacity similar to electrically-conductive materials, thereby not practical. Production of positive electrode is conducted preferably by heat treatment near melting point of binder to improve integrity thereof.

Examples of separator to retain electrolyte solutions are known woven or unwoven fabric of electrical insulators such as synthetic resin fiber, glass fiber and natural fiber, powder molding of alumina and the like. In particular, unwoven fabric of synthetic resin such as polyethylene and polypropylene are preferable from the viewpoint of stability of quality. An unwoven fabric of synthetic resin which is endowed with blocking function between positive and negative electrodes exerted by melting the separator with abnormal exothermic heat of battery is suitably used from the viewpoint of safety. A thickness of separator is not specifically limited, as long as separator may retain a required amount of electrolyte solution and inhibit short circuit between positive and negative electrodes, but generally about 0.01-1 mm, preferably about 0.02-0.05mm.

Materials of collector are not specifically limited to, but include known metals such as copper, nickel, stainless steel, aluminum and titanium in a form of metallic foil, mesh, porous body and so on.

### Effect of the Invention

According to the invention, novel carbon materials, in which surface of carbon materials to be core material is coated with heavy oil etc., may be obtained by dipping carbon materials, in particular, high-crystallinity graphite-type materials into tar, pitch and like coal heavy oil or petroleum heavy oil, followed by sepatrating coated carbon materials from heavy oil etc., washing with organic solvent and drying.

The carbon materials with a specific structure, wherein the surface of core material comprising graphite-type material with high crystallinity is covered by carbon-type material with low crystallinity, may be obtained by carbonization of graphite-type material whose surface is uniformly coated with pitch at 600-2,000°C.

According to the method for production of the invention, since no fusing or aggregation between particles occurs, when core carbon materials coated with pitch, tar and like heavy oil is washed, dried and calcined, no grinding is required leading to preparation of near spheric, so called "edgeless", particles. The particles are free of deterioration factor, i.e., contamination during grinding.

When non-aqueous secondary batteries or solid electrolyte batteries are prepared using the coated carbon materials of the invention, in particular carbon materials prepared by coating surface of graphite material with heavy oil etc. or calcination product thereof, the batteries are superior in both charge and discharge properties and safety.

The production method of the invention using inexpensive natural and artificial graphites and the like as core material, and inexpensive pitch, tar and the like as coating material is a simple and highly productive method so that inexpensive and high performance material for negative electrode of lithium secondary battery may be obtained.

Furthermore, according to the invention, possible are 4 combinations between core materials and surface materials including low-crystallinity carbon material + low-crystallinity carbon material; low-crystallinity carbon material + high-crystallinity carbon material; high-crystallinity carbon material and low-crystallinity carbon material; and high-crystallinity carbon material and high-crystallinity carbon material. Eight type of carbon materials are obtained in further consideration of 2 calcination step (carbonization step and graphitization step). Carbon materials comprising combinations of carbonization-treated high-crystallinity carbon material + low-crystallinity carbon material and high-crystallinity carbon material + high-crystallinity carbon material; and also graphitization-treated high-crystallinity carbon material + low-crystallinity carbon material are, in particular, useful as materials for negative electrode of lithium secondary battery because of low reactivity with electrolyte and remarkable charge and discharge properties.

### Best Mode for Carrying out the Invention

The inventions are described below in detail. A variety of determinations are carried out according to the following ways.

### 1. Determination of particle diameter

Center particle diameter and particle size distribution of particles are determined with "FRA9220 Microtrac" product of Nikkiso.

### 2. Determination of covering ratio and coating thickness

With respect to carbon components from heavy oil covering the surface of core material before calcination, quinoline insoluble matter (%) was determined by an analysis with solvent according to the method specified by JIS K2425 so as to calculate quinoline soluble matter (%) was calculated according to "100 - (quinoline insoluble matter)". The amount of quinoline soluble matter corresponds to the amount of coat-forming carbon material.

A weight ratio of carbon materials for coating formation/(core carbon materials + carbon materials for coating formation) was calculated according to above-mentioned method.

### 3. Determination of specific surface area

The specific surface area was determined with "ASAP2400/nitrogen adsorption BET specific surface area measuring equipment" product of Micromeritics.

### 4. Determination of true specific gravity

True specific gravity was determined according to the method specified by JIS R7212.

### 5. Determination of crystal lattice size according to X-ray wide-angle diffractometry

Determination of crystal lattice size (Lc, La) according to X-ray wide-angle diffractometry was conducted by a known method described in "CARBON MATERIAL EXPERIMENTAL TECHNIQUE 1, pp.55-63, Ed. Carbon Material Society (KAGAKUGIJYUTUSYA)". For the shape factor K, 0.90 was used.

### 6. Raman spectrometric analysis

Furthermore, as surface physical properties of carbon materials, R value was determined as ratio of peak strength of 1360cm⁻¹/1580cm⁻¹ using 2 peaks observed by Raman spectrometric analysis with an argon laser at 514.5nm.

### 7. Determination of generated gas by immersing a negative electrode in electrolyte solution, followed by maintaining at elevated temperature

A pitch-coated carbon material (pitch-coated graphite) was calcined at 2,800 °C for 1 hour under nitrogen atmosphere for graphitization. 95 parts by weight of graphitized pitch-coated graphite and 5 parts by weight of dispersion-type PTFE ("D-1" product of Daikin Industries Ltd.) were mixed, uniformely stirred in liquid phase and dried to make a paste-like material. 0.25g of the material for negative electrode was molded by a pressing machine to produce a negative electrode body having a diameter of 2cm, and then dried in vacuo at 200°C for 6 hours.

Subsequently, the negative electrode was charged until electric potential thereof in electrolyte became 0 V. The charged negative electrode was placed into a beaker cell with 25 ml of electrolytic solution, which was heated at 60°C for 6 hours to determine the amount of generated gas per 1g of graphitized pitch-coated graphite.

As electrolytic solution, a mixed solvent of ethylene carbonate, diethyl carbonate and methyl propionate (3:3:4 ratio by volume) in which 1 moldm⁻³ of LiClO₄ was dissolved was used.

### 8. Production of non-aqueous battery and determination of battery properties

A positive electrode is generally prepared by mixing material for positive electrode, electrically-conductive material and binder. Carbon black, graphite and like carbon materials or metal powder, metal-wool, and like metallic substances are suitably used as electrically-conductive materials. Binders may be mixed in the form of powder, or in the form of dispersion or dissolved solution so as to improve integrity. When such a dispersion or dissolved solution thereof is used, removal of the solvent by vacuum treatment, heat treatment or like means is required. Integrity may be further improved by heat-treatment at near melting point depending on the type of binders.

In examples of the present application, a mixture of 100 parts by weight of LiCoO₂ as material for positive electrode, 10 parts by weight of acetylene black as electrically-conductive material and 10 parts by weight of PTFE powder as binder was formed into electrode having a diameter of 10mm to obtain a positive electrode body.

A negative electrode body is produced as follows in examples of the present application.

Pitch-coated graphite was calcined at 1,000°C for 1 hour for carbonization. 95 parts by weight of the carbonized pitch-coated graphite and 5 parts by weight of dispersion-type PTFE ("D-1" product of Daikin Industries Ltd.) were mixed, uniformely stirred in liquid phase and dried to make paste-like material. 30mg of the material for negative electrode was molded by a pressing machine to produce a negative electrode body having a diameter of 10mm, and then dried in vacuo at 200°C for 6 hours.

Separately, pitch-coated graphite was calcined at 2,800°C for 1 hour for graphitization. 95 parts by weight of the graphitized pitch-coated graphite and 5 parts by weight of dispersion-type PTFE ("D-1" product of Daikin Industries Ltd.) were mixed, uniformely stirred in liquid phase and dried to make paste-like material. 30mg of the material for negative electrode was molded by a pressing machine to produce a negative electrode body having a diameter of 10mm, and then dried in vacuo at 200°C for 6 hours.

Polypropylene unwoven fabric was used as separator.

Electrical discharge properties of coin-type lithium secondary battery, prepared by using the positive electrode body, the negative electrode body, the separator and the electrolytic solution thus obtained, were determined. The determination was carried out under constant-current charge and discharge of 1mA/cm². Discharge capacity was regarded as capacity until battery voltage was decreased to 1.2V.

### 9. Preparation of solid electrolyte battery and determination of battery properties

The paste-like material of negative electrode prepared in the same manner as the item (said 8.) of preparation of non-aqueous battery was applied to both sides of copper foil in a thichness of 0.02 mm, dried and rolled to obtain a negative electrode plate having a thichness of 0.10mm, width of 55mm and length of 90 mm.

A solid electrolyte, (PEO)₈·LiClO₄, was prepared by dissolving polyethyleneoxide (molecular weight 600,000) and LiClO₄ in acetonitrile, followed by casting the solution on a PTFE membrane ("TEFLON" product of DUPONT) under argon atmosphere in glovebox, and then distillating the solvent by allowing it to stand at 25 °C in glovebox.

A film-type lithium secondary battery was prepared by using carbonized pitch-coated graphite or graphitized pitch-coated graphite as negative electrode body, LiCoO₂ as solid electrolyte and positive electrode body and (PEO)₈·LiClO₄ as solid electrolyte.

Electrical discharge properties of lithium secondary battery thus prepared were determined. The determination was carried out under constant-current charge and discharge of 1mA/cm². Discharge capacity was regarded as capacity until battery voltage was decreased to 1.2V.

### Example 1

50g of massive artifitial graphite (center particle diameter D50 = 7.5µm; particle size distribution 0.1-150µm; d002=0.336nm; Lc=100nm; La=97nm; specific surface area = 10.8m²/g; R value = 0.26; true specific gravity = 2.25g/cm²) and 100g of coal tar pitch (softening point 80°C; quinoline insoluble matter = trace; toluene insoluble matter = 30%) whose primary QI was removed previously were added to a 500ml reaction flask. The mixture was stirred for 2 hours at 200°C under normal pressure to give crude pitch-coated graphite. Toluene (1 part) was added to the crude pitch-coated graphite thus obtained (1 part), and the mixture was stirred at 80°C for 1 hour for washing treatment and filtered to give purified pitch-coated graphite. Center particle diameter D50 of the purified pitch-coated graphite was determined as 7.7µm. Since center particle diameter D50 of graphite as core material was 7.5µm, a thickness of pitch layer is 0.1µm.

The quinoline soluble matter, specific surface area and true specific gravity of the resulting purified pitch-coated graphite are shown in table 1. Since quinoline soluble matter was 9.6%, a covering ratio of the purified pitch-coated graphite is 0.096.

The purified pitch-coated graphite was calcined at 1,000°C for 1 hour under nitrogen atmosphere (heating rate 25°C/hr) for carbonization. The specific surface area, true specific gravity, R value and volume-based integrated value of particles having a diameter of 1µm or less of the carbonized pitch-coated graphite are shown in table 1. The results of determination of particle size distribution of the purified pitch-coated graphite indicated that the coated graphite has a distribution within 0.1-150 µm. The results of X-ray diffractometry thereof were similar to those of core material. Furthermore, comparison of R values between core material and carbonized pitch-coated graphite indicated that carbonized pitch forming a coating layer had lower crystallinity than core material. The results of SEM observation indicate that artifitial graphite as core material was coated with carbonized pitch forming a coating layer and that edge parts thereof were rounded.

A non-aqueous secondary battery was produced using, as an electrolytic solution, propylene carbonate in which 1 moldm⁻³ of LiClO₄ was dissolved and a negative electrode which was produced by using the carbonized pitch-coated graphite. The results of determination of charge and discharge properties thereof are shown in table 2.

Furthermore, a negative electrode was produced using a negative electrode which was produced by using the carbonized pitch-coated graphite. The results of determination of charge and discharge properties thereof are shown in table 3.

### Example 2

The purified pitch-coated graphite obtained according to example 1 was calcined at 1,000°C for 1 hour under vacuum of 10 torr (heating rate 25°C/hr) for vacuum carbonization. The specific surface area, true specific gravity, R value and volume-based integrated value of : particles having a diameter of 1µm or less of the resulting vacuum carbonized pitch-coated graphite are shown in table 1. The results of determination of particle size distribution of the vacuum carbonized pitch-coated graphite indicated that the coated graphite had a distribution within 0.1-150 µm as core material. The results of X-ray diffractometry thereof were similar to those of core material. Furthermore, comparison of R values between core material and vacuum carbonized pitch-coated graphite indicated that carbonized pitch forming a coating layer had lower crystallinity than core material. The results of SEM observation indicated that artifitial graphite as core material are coated with vacuum carbonized pitch forming a coating layer and that edge parts thereof were rounded.

A non-aqueous secondary battery was produced using, as an electrolytic solution, propylene carbonate in which 1 moldm⁻³ of LiClO₄ was dissolved and a negative electrode which was produced by using the vacuum carbonized pitch-coated graphite. The results of determination of charge and discharge properties thereof are shown in table 2.

### Example 3

The purified pitch-coated graphite obtaind according to example 1 was calcined at 2,800°C for 1 hour under nitrogen atmosphere for graphitization. The specific surface area, true specific gravity, R value and volume-based integrated value of particles having a diameter of 1µm or less of the resulting graphatized pitch-coated graphite are shown in table 1. The results of determination of particle size distribution of the graphatized pitch-coated graphite indicated that the coated graphite had a distribution within 0.1-150 µm as core material. The results of X-ray diffractometry thereof were similar to those of core material. Furthermore, comparison of R values between core material and graphatized pitch-coated graphite indicated that graphitised pitch forming a coating layer had lower crystallinity than core material. The results of SEM observation indicated that artifitial graphite as core material was coated with graphitized pitch forming a coating layer and that edge parts thereof were rounded.

A non-aqueous secondary battery was produced using, as an electrolytic solution, a mixed solvent of ethylene carbonate, diethyl carbonate and methyl-propionate (3:3:4) in which 1 moldm⁻³ of LiClO₄ was dissolved and a negative electrode which was produced by using the graphatized pitch-coated graphite.

The amount of generated gas of the graphatized pitch-coated graphite in the electrolytic solution was determined. The results of determination of charge and discharge properties and the amount of generated gas are shown in table 2.

### Example 4

The purified pitch-coated graphite obtaind according to example 1 was calcined at 1,000°C in a lead furnace capable of elevating temperature very slowly (reducing atomosphere, heating rate of up to 5°C/hr) for carbonization. The specific surface area, true specific gravity, R value and volume-based integrated value of particles having a diameter of 1µm or less of the resulting carbonized pitch-coated graphite are shown in table 1. The results of determination of particle size distribution of the carbonized pitch-coated graphite indicated that the coated graphite had a distribution within 0.1-150 µm as core material. The results of X-ray diffractometry thereof were similar to those of core material. Furthermore, comparison of R values between core material and carbonized pitch-coated graphite indicared that carbonized pitch forming a coating layer had lower crystallinity than core material. The results of SEM observation indicated that artifitial graphite as core material was coated with carbonized pitch forming a coating layer and that edge parts thereof were rounded.

A non-aqueous secondary battery was produced using, as an electrolytic solution, propylene carbonate in which 1 moldm⁻³ of LiClO₄ was dissolved and a negative electrode which was produced by using the carbonized pitch-coated graphite. The results of determination of charge and discharge properties thereof are shown in table 2.

### Example 5

The purified pitch-coated graphite obtaind according to example 1 was calcined at 1,300°C for 1 hour under nitrogen atmosphere (heating rate 25°C/hr) for carbonization. The specific surface area, true specific gravity, R value and volume-based integrated value of particles having a diameter of 1µm or less of the carbonized pitch-coated graphite are shown in table 1. The results of determination of particle size distribution of the carbonized pitch-coated graphite indicated that the coated graphite had a distribution within 0.1-150 µm as core material. The results of X-ray diffractometry thereof were similar to those of core material. Furthermore, comparison of R values between core material and carbonized pitch-coated graphite indicated that carbonized pitch forming a coating layer has lower crystallinity than core material. The results of SEM observation indicated that artifitial graphite as core material was coated with carbonized pitch forming a coating layer and that edge parts thereof were rounded.

A non-aqueous secondary battery was produced using, as an electrolytic solution, propylene carbonate in which 1 moldm⁻³ of LiClO₄ was dissolved and a negative electrode which was produced by using the carbonized pitch-coated graphite. The results of determination of charge and discharge properties thereof are shown in table 2.

### Example 6

The purified pitch-coated graphite obtained according to example 1 was treated for oxidation at 300°C for 8 hours under air atmosphere in a chamber with constant temperature and relative humidity. The covering ratio, specific surface area and true specific gravity of the resulting oxidized and purified pitch-coated graphite are shown in table 1. The oxidized and purified pitch-coated graphite was calcined at 1,000°C for 1 hour under nitrogen atmosphere (heating rate 25°C/hr) for carbonization. The specific surface area, true specific gravity, R value and volume-based integrated value of particles having a diameter of 1µm or less of the carbonized pitch-coated graphite are shown in table 1. The results of determination of particle size distribution of the carbonized pitch-coated graphite indicated that the coated graphite had a distribution within 0.1-150 µm as core material. The results of X-ray diffractometry thereof were similar to those of core material. Furthermore, comparison of R values between core material and carbonized pitch-coated graphite indicated that carbonized pitch forming a coating layer had lower crystallinity than core material. The results of SEM observation indicated that artifitial graphite as core material was coated with carbonized pitch forming a coating layer and that edge parts thereof were rounded.

A non-aqueous secondary battery was produced using, as an electrolytic solution, propylene carbonate in which 1 moldm⁻³ of LiClO₄ was dissolved and a negative electrode which was produced by using the carbonized pitch-coated graphite. The results of determination of charge and discharge properties thereof are shown in table 2.

### Example 7

50g of massive artifitial graphite (center particle diameter D50 = 7.5µm; particle size distribution 0.1-150µm; d002=0.336nm; Lc=100nm; La=97nm; specific surface area = 10.8m²/g; R value = 0.26; true specific gravity = 2.25g/cm³) and 100g of coal tar pitch (softening point 80°C; quinoline insoluble matter = trace; toluene insoluble matter = 30%) whose primary QI was removed previously were added to a 500ml reaction flask. The mixture was stirred for 2 hours at 200°C to give crude pitch-coated graphite.

Toluene (1 part) was added to the crude pitch-coated graphite thus obtained (1 part), and the mixture was stirred at 20°C for 1 hour for washing treatment and filtered to give purified pitch-coated graphite. Center particle diameter D50 of the purified pitch-coated graphite was determined as 7.9µm. Since center particle diameter D50 of graphite as core material was 7.5µm, a thickness of pitch layer is 0.2µm.

The covering ratio, specific surface area and true specific gravity of the purified pitch-coated graphite obtained are shown in table 1. Since quinoline soluble matter thereof was 20.4%, a covering ratio of the purified pitch-coated graphite is 0.204.

The purified pitch-coated graphite thus obtained was calcined at 1,000°C for 1 hour under nitrogen atmosphere (heating rate 25°C/hr) for carbonization. The specific surface area, true specific gravity, R value and volume-based integrated value of particles having a diameter of 1µm or less with respect to the carbonized pitch-coated graphite obtained are shown in table 1. The results of determination of particle size distribution of the purified pitch-coated graphite indicated that the coated graphite had a distribution within 0.1-150 µm. The results of X-ray diffractometry thereof were similar to those of core material. Furthermore, comparison of R values between core material and carbonized pitch-coated graphite indicated that carbonized pitch forming a coating layer had lower crystallinity than core material. The results of SEM observation indicated that artifitial graphite as core material was coated with carbonized pitch forming a coating layer and that edge parts thereof were rounded.

A non-aqueous secondary battery was produced using, as an electrolytic solution, propylene carbonate in which 1 moldm⁻³ of LiClO₄ was dissolved and a negative electrode which was produced by using the carbonized pitch-coated graphite. The results of determination of charge and discharge properties thereof are shown in table 2.

### Example 8

The purified pitch-coated graphite obtained according to example 7 was calcined at 2,800°C for 1 hour under nitrogen atmosphere for graphitization. The specific surface area, true specific gravity, R value and volume-based integrated value of particles having a diameter of 1µm or less of the resulting graphitized pitch-coated graphite are shown in table 1. The results of determination of particle size distribution of the graphitized pitch-coated graphite indicated that the coated graphite had a distribution within 0.1-150 µm as core material. The results of X-ray diffractometry thereof were similar to those of core material. Furthermore, comparison of R values between core material and graphitized pitch-coated graphite indicsted that graphitized pitch forming a coating layer had lower crystallinity than core material. The results of SEM observation indicated that artifitial graphite as core material was coated with grafitized pitch forming a coating layer and that edge parts thereof were rounded.

A non-aqueous secondary battery was produced using, as an electrolytic solution, a mixed solvent of ethylene carbonate, diethyl carbonate and methyl-propionate (3:3:4) in which 1 moldm⁻³ of LiClO₄ was dissolved and a negative electrode which was produced by using the graphatized pitch-coated graphite. The amount of generated gas of the graphatized pitch-coated graphite in the electrolytic solution was determined. The results of determination of charge and discharge properties and the amount of generated gas are shown in table 2.

### Example 9

50g of massive artifitial graphite (center particle diameter D50 = 7.5µm; particle size distribution 0.1-150µm; d002=0.336nm; Lc=100nm; La=97nm; specific surface area = 10.8m²/g; R value = 0.26; true specific gravity = 2.25g/cm³) and 100g of coal tar pitch (softening point 80°C; quinoline insoluble matter = trace; toluene insoluble matter = 30%) whose primary QI was removed previously were added to a 500ml reaction flask. The mixture was stirred for 2 hours at 200°C under reduced pressure (evacuated with a vacuum pump; reduced pressure = 50 torr) to give crude pitch-coated graphite.

Toluene (1 part) was added to the crude pitch-coated graphite thus obtained (1 part), and the mixture was stirred at 80°C for 1 hour for washing treatment and filtered to give purified pitch-coated graphite. Center particle diameter D50 of the purified pitch-coated graphite was determined as 7.7µm. Since center particle diameter D50 of graphite as core material was 7.5µm, a thickness of pitch layer is 0.1µm.

The covering ratio, specific surface area and true specific gravity of the purified pitch-coated graphite obtained are shown in table 1. Since quinoline soluble matter thereof was 10.4%, a covering ratio of the purified pitch-coated graphite is 0.104.

The purified pitch-coated graphite thus obtained was calcined at 1,000°C for 1 hour under nitrogen atmosphere (heating rate 25°C/hr) for carbonization. The specific surface area, true specific gravity, R value and volume-based integrated value of particles having a diameter of 1µm or less of the carbonized pitch-coated graphite obtained are shown in table 1. The results of determination of particle size distribution of the purified pitch-coated graphite indicated that the coated graphite had a distribution within 0.1-150 µm as core material. The results of X-ray diffractometry thereof were similar to those of core material. Furthermore, comparison of R values between core material and carbonized pitch-coated graphite indicated that carbonized pitch forming a coating layer had lower crystallinity than core material. The results of SEM observation indicated that artifitial graphite as core material was coated with carbonized pitch forming a coating layer and that edge parts thereof were rounded.

A non-aqueous secondary battery was produced using, as an electrolytic solution, propylene carbonate in which 1 moldm⁻³ of LiClO₄ was dissolved and a negative electrode which was produced by using the carbonized pitch-coated graphite. The results of determination of charge and discharge properties thereof are shown in table 2.

### Example 10

50g of massive artifitial graphite (center particle diameter D50 = 7.5µm; particle size distribution 0.1-150µm; d002=0.336nm; Lc=100nm; La=97nm; specific surface area = 10.8m²/g; R value = 0.26; true specific gravity = 2.25g/cm²) and 100g of coal tar pitch (softening point 80°C; quinoline insoluble matter = trace; toluene insoluble matter = 30%) whose primary QI was removed previously were added to a 500ml reaction flask. The mixture was stirred for 2 hours at 200°C to give crude pitch-coated graphite.

Tar middle oil (1 part) was added to the crude pitch-coated graphite thus obtained (1 part), and the mixture was stirred at 20°C for 1 hour for washing treatment and filtered to give purified pitch-coated graphite. Center particle diameter D50 of the purified pitch-coated graphite was determined as 7.6µm. Since center particle diameter D50 of graphite as core material is 7.5µm, a thickness of pitch layer is 0.05µm.

The covering ratio, specific surface area and true specific gravity of the purified pitch-coated graphite obtained are shown in table 1. Since quinoline soluble matter thereof was 8.8%, a covering ratio of the purified pitch-coated graphite is 0.088.

The purified pitch-coated graphite thus obtained was calcined at 1,000°C for 1 hour under nitrogen atmosphere (heating rate 25°C/hr) for carbonization. The specific surface area, true specific gravity, R value and volume-based integrated value of particles having a diameter of 1µm or less of the carbonized pitch-coated graphite obtained are shown in table 1. The results of determination of particle size distribution of the purified pitch-coated graphite indicated that the coated graphite had a distribution within 0.1-150 µm as core material. The results of X-ray diffractometry thereof are similar to those of core material. Furthermore, comparison of R values between core material and graphitized pitch-coated graphite indicated that graphitized pitch forming a coating layer had lower crystallinity than core material. The results of SEM observation indicated that artifitial graphite as core material was coated with graphitized pitch forming a coating layer and that edge parts thereof were rounded.

A non-aqueous secondary battery was produced using, as an electrolytic solution, propylene carbonate in which 1 moldm⁻³ of LiClO₄ was dissolved and a negative electrode which was produced by using the carbonized pitch-coated graphite. The results of determination of charge and discharge properties thereof are shown in table 2.

### Example 11

50g of massive artifitial graphite (center particle diameter D50 = 7.5µm; particle size distribution 0.1-150µm; d002=0.336nm; Lc=100nm; La=97nm; specific surface area = 10.8m²/g; R value = 0.26; true specific gravity = 2.25g/cm³) and 200g of coal tar pitch (softening point 80°C; quinoline insoluble matter = trace; toluene insoluble matter = 30%) whose primary QI was removed previously were added to a 1,000ml reaction flask. The mixture was stirred for 2 hours at 200°C to give crude pitch-coated graphite.

Toluene (1 part) was added to the crude pitch-coated graphite thus obtained (1 part), and the mixture was stirred at 80°C for 1 hour for washing treatment and filtered to give purified pitch-coated graphite. Center particle diameter D50 of the purified pitch-coated graphite was determined as 7.9µm. Since center particle diameter D50 of graphite as core material is 7.5µm, thickness of pitch layer is 0.2µm.

The covering ratio, specific surface area and true specific gravity of the purified pitch-coated graphite obtained are shown in table 1. Since quinoline soluble matter thereof was 17.3%, a covering ratio of the purified pitch-coated graphite is 0.173.

The purified pitch-coated graphite thus obtained was calcined at 1,000°C for 1 hour under nitrogen atmosphere (heating rate 25°C/hr) for carbonization. The specific surface area, true specific gravity, R value and volume-based integrated value of particles having a diameter of 1µm or less of the carbonized pitch-coated graphite obtained are shown in table 1. The results of determination of particle size distribution of the purified pitch-coated graphite indicated that the coated graphite had a distribution within 0.1-150 µm as core material. The results of X-ray diffractometry thereof were similar to those of core material. Furthermore, comparison of R values between core material and graphitized pitch-coated graphite indicated that carbonized pitch forming a coating layer had lower crystallinity than core material. The results of SEM observation indicated that artifitial graphite as core material was coated with carbonized pitch forming a coating layer and that edge parts thereof were rounded.

A non-aqueous secondary battery was produced using, as an electrolytic solution, propylene carbonate in which 1 moldm⁻³ of LiClO₄ was dissolved and a negative electrode which was produced by using the carbonized pitch-coated graphite. The results of determination of charge and discharge properties thereof are shown in table 2.

### Example 12

50g of massive artifitial graphite (center particle diameter D50 = 7.5µm; particle size distribution 0.1-150µm; d002=0.336nm; Lc=100nm; La=97nm; specific surface area = 10.8m²/g; R value = 0.26; true specific gravity = 2.25g/cm³) and 100g of coal tar pitch (softening point 80°C; quinoline insoluble matter = 3.9%; toluene insoluble matter = 34%) whose primary QI was not removed were added to a 500ml reaction flask. The mixture was stirred for 2 hours at 200°C under normal pressure to give crude pitch-coated graphite.

Toluene (1 part) was added to the crude pitch-coated graphite thus obtained (1 part), and the mixture was stirred at 80°C for 1 hour for washing treatment and filtered to give purified pitch-coated graphite. Center particle diameter D50 of the purified pitch-coated graphite was determined as 7.9µm. Since center particle diameter D50 of graphite as core material was 7.5µm, thickness of pitch layer is 0.2µm.

The covering ratio, specific surface area and true specific gravity of the purified pitch-coated graphite obtained are shown in table 1. Since quinoline soluble matter thereof was 7.5%, a covering ratio of the purified pitch-coated graphite is 0.075.

The purified pitch-coated graphite thus obtained was calcined at 1,000°C for 1 hour under nitrogen atmosphere (heating rate 25°C/hr) for carbonisation. The specific surface area, true specific gravity, R value and volume-based integrated value of particles having a diameter of 1µm or less with respect to the carbonized pitch-coated graphite obtained are shown in table 1. The results of determination of particle size distribution of the purified pitch-coated graphite indicated that the coated graphite had a distribution within 0.1-150 µm as core material. The results of X-ray diffractometry thereof were similar to those of core material. Furthermore, comparison of R values between core material and carbonized pitch-coated graphite indicated that carbonized pitch forming a coating layer had lower crystallinity than core material. The results of SEM observation indicated that artifitial graphite as core material was coated with carbonized pitch forming a coating layer and that edge parts thereof were rounded.

A non-aqueous secondary battery was produced using, as an electrolytic solution, propylene carbonate in which 1 moldm⁻³ of LiClO₄ was dissolved and a negative electrode which was produced by using the carbonized pitch-coated graphite. The results of determination of charge and discharge properties thereof are shown in table 2.

### Example 13

50g of massive artifitial graphite (center particle diameter D50 = 7.5µm; particle size distribution 0.1-150µm; d002=0.336nm; Lc=100nm; La=97nm; specific surface area = 10.8m²/g; R value = 0.26; true specific gravity = 2.25g/cm²) and 100g of coal tar pitch (softening point 10°C; quinoline insoluble matter = trace; toluene insoluble matter = 8%) whose primary QI was removed previously were added to a 500ml reaction flask. The mixture was stirred for 2 hours at 200°C under normal pressure to give crude pitch-coated graphite.

Toluene (1 part) was added to the crude pitch-coated graphite thus obtained (1 part), and the mixture was stirred at 80°C for 1 hour for washing treatment and filtered to give purified pitch-coated graphite. Center particle diameter D50 of the purified pitch-coated graphite was determined as 7.6µm. Since center particle diameter D50 of graphite as core material is 7.5µm, a thickness of pitch layer is 0.05µm.

The covering ratio, specific surface area and true specific gravity of the purified pitch-coated graphite obtained are shown in table 1. Since quinoline soluble matter thereof was 7.8%, a covering ratio of the purified pitch-coated graphite is 0.078.

The purified pitch-coated graphite thus obtained was calcined at 1,000°C for 1 hour under nitrogen atmosphere (heating rate 25°C/hr) for carbonization. The specific surface area, true specific gravity, R value and volume-based integrated value of particles having a diameter of 1µm or less of the carbonized pitch-coated graphite obtained are shown in table 1. The results of determination of particle size distribution of the purified pitch-coated graphite indicated that the coated graphite had a distribution within 0.1-150 µm as core material. The results of X-ray diffractometry thereof were similar to those of core material. Furthermore, comparison of R values between core material and carbonized pitch-coated graphite indicated that carbonized pitch forming a coating layer had lower crystallinity than core material. The results of SEM observation indicated that artifitial graphite as core material was coated with carbonized pitch forming a coating layer and that edge parts thereof were rounded.

A non-aqueous secondary battery was produced using, as an electrolytic solution, propylene carbonate in which 1 moldm⁻³ of LiClO₄ was dissolved and a negative electrode which was produced by using the carbonized pitch-coated graphite. The results of determination of charge and discharge properties thereof are shown in table 2.

Furthermore, a negative electrode which was produced by using the carbonized pitch-coated graphite, and then a solid electrolyte lithium secondary battery was produced. The results of determination of charge and discharge properties thereof are shown in table 3.

### Example 14

50g of graphitized spheric mesocarbon microbeads ("MCMB-6-28" product of Osaka Gas Co., Ltd., center particle diameter D50 = 6.0µm; particle size distribution 0.1-50µm; d002=0.336nm; Lc=50nm; La=90nm; specific surface area = 3.0m²/g; R value = 0.42; true specific gravity = 2.20g/cm³) and 100g of coal tar pitch (softening point 80°C; quinoline insoluble matter = trace; toluene insoluble matter = 30%) whose primary QI was removed previously were added to a 500ml reaction flask. The mixture was stirred for 2 hours at 200°C under normal pressure to give crude pitch-coated mesocarbon microbeads.

Toluene (1 part) was added to the crude pitch-coated mesocarbon microbeads thus obtained (1 part), and the mixture was stirred at 80°C for 1 hour for washing treatment and filtered to give purified pitch-coated mesocarbon microbeads. Center particle diameter D50 of the purified pitch-coated mesocarbon microbeads was determined as 6.2µm. Since center particle diameter D50 of graphite as core material was 6.0µm, a thickness of pitch layer is 0.1µm.

The covering ratio, specific surface area and true specific gravity of the purified pitch-coated mesocarbon microbeads obtained are shown in table 1. Since quinoline soluble matter thereof was 9.8%, a covering ratio thereof is 0.098.

The purified pitch-coated graphitized mesocarbon microbeads thus obtained was calcined at 1,000°C for 1 hour under nitrogen atmosphere (heating rate 25°C/hr) for carbonization. The specific surface area, true specific gravity, R value and volume-based integrated value of particles having a diameter of 1µm or less of the purified pitch-coated graphitized mesocarbon microbeads are shown in table 1. The results of determination of particle size distribution of the purified pitch-coated graphitized mesocarbon microbeads indicated that the mesocarbon microbeads had a distribution within 0.1-50 µm as core material. Furthermore, comparison of R values between core material and carbonized pitch-coated graphitized mesocarbon microbeads indicated that carbonized pitch forming a coating layer had lower crystallinity than core material.

A non-aqueous secondary battery was produced using, as an electrolytic solution, propylene carbonate in which 1 moldm⁻³ of LiClO₄ was dissolved and a negative electrode which was produced by using the carbonized pitch-coated graphitized mesocarbon microbeads. The results of determination of charge and discharge properties thereof are shown in table 2.

### Example 15

50g of massive artifitial graphite (center particle diameter D50 = 16.2µm; particle size distribution 0.1-120µm; d002=0.337nm; Lc=100nm; La=71nm; specific surface area = 14.4m²/g; R value = 0.31; true specific gravity = 1.96g/cm³) and 100g of coal tar pitch (softening point 80°C; quinoline insoluble matter = trace; toluene insoluble matter = 30%) whose primary QI was removed previously were added to a 1,000ml reaction flask. The mixture was stirred for 5 hours at 250°C under normal pressure to give crude pitch-coated graphite.

Toluene (3 parts) was added to the crude pitch-coated graphite thus obtained (1 part), and the mixture was stirred at 50°C for 5 hour for washing treatment and filtered to give purified pitch-coated graphite. Center particle diameter D50 of the purified pitch-coated graphite was determined as 16.6µm. Since center particle diameter D50 of graphite as core material is 16.2µm, a thickness of pitch layer is 0.2µm.

The covering ratio, specific surface area and true specific gravity of the purified pitch-coated graphite obtained are shown in table 1. Since quinoline soluble matter thereof was 11.3%, a covering ratio of the purified pitch-coated graphite is 0.113.

The purified pitch-coated graphite thus obtained was calcined at 1,000°C for 1 hour under nitrogen atmosphere (heating rate 25°C/hr) for carbonization. The specific surface area, true specific gravity, R value and volume-based integrated value of particles having a diameter of 1µm or less with respect to the carbonized pitch-coated graphite obtained are shown in table 1. The results of determination of particle size distribution of the purified pitch-coated graphite indicated that the coated graphite had a distribution within 0.1-120 µm as core material. The results of X-ray diffractometry thereof were similar to those of core material. Furthermore, comparison of R values between core material and carbonized pitch-coated graphite indocated that carbonized pitch forming a coating layer had lower crystallinity than core material. The results of SEM observation indicated that artifitial graphite as core material was coated with carbonized pitch, i.e., coat-forming carbon materials and that edge parts thereof were rounded.

A non-aqueous secondary battery was produced using, as an electrolytic solution, propylene carbonate in which 1 moldm⁻³ of LiClO₄ was dissolved and a negative electrode which was produced by using the carbonized pitch-coated graphite. The results of determination of charge and discharge properties thereof are shown in table 2.

### Example 16

50g of massive artifitial graphite (center particle diameter D50 = 16.2µm; particle size distribution 1-80µm; d002=0.338nm; Lc=83nm; La=63nm; specific surface area = 6.8m²/g; R value = 0.38; true specific gravity = 2.02g/cm³) and 100g of coal tar pitch (softening point 80°C; quinoline insoluble matter = trace; toluene insoluble matter = 30%) whose primary QI was removed previously were added to a 1,000ml reaction flask. The mixture was stirred for 5 hours at 250°C under normal pressure to give crude pitch-coated graphite.

Toluene (3 parts) was added to the crude pitch-coated graphite thus obtained (1 part), and the mixture was stirred at 50°C for 5 hour for washing treatment and filtered to give purified pitch-coated graphite. Center particle diameter D50 of the purified pitch-coated graphite was determined as 12.0µm. Since center particle diameter D50 of graphite as core material was 11.6µm, a thickness of pitch layer is 0.2µm.

The covering ratio, specific surface area and true specific gravity of the purified pitch-coated graphite obtained are shown in table 1. Since quinoline soluble matter thereof was 12.3%, a covering ratio of the purified pitch-coated graphite is 0.123.

The purified pitch-coated graphite thus obtained was calcined at 1,000°C for 1 hour under nitrogen atmosphere (heating rate 25°C/hr) for carbonization. The specific surface area, true specific gravity, R value and volume-based integrated value of particles having a diameter of 1µm or less with respect to the carbonized pitch-coated graphite obtained are shown in table 1. The results of determination of particle size distribution of the purified pitch-coated graphite indicated that the coated graphite had a distribution within 1-80 µm. The results of X-ray diffractometry thereof were similar to those of core material. Furthermore, comparison of R values between core material and carbonized pitch-coated graphite indicated that carbonized pitch, i.e., coat-forming carbon materials had lower crystallinity than core material. The results of SEM observation indicated that artifitial graphite as core material was coated with carbonized pitch, i.e., coat-forming carbon materials and that edge parts thereof were rounded.

A non-aqueous secondary battery was produced using, as an electrolytic solution, propylene carbonate in which 1 moldm⁻³ of LiClO₄ was dissolved and a negative electrode which was produced by using the carbonized pitch-coated graphite. The results of determination of charge and discharge properties thereof are shown in table 2.

### Example 17

50g of scaly artifitial graphite (center particle diameter D50 = 18.9µm; particle size distribution 0.1-150µm; d002=0.340nm; Lc=42nm; La=50nm; specific surface area = 9.2m²/g; R value = 0.49; true specific gravity = 1.82g/cm³) and 100g of coal tar pitch (softening point 80°C; quinoline insoluble matter = trace; toluene insoluble matter = 30%) whose primary QI was removed previously were added to a 1,000ml reaction flask. The mixture was stirred for 5 hours at 250°C under normal pressure to give crude pitch-coated graphite.

Toluene (3 parts) was added to the crude pitch-coated graphite thus obtained (1 part), and the mixture was stirred at 50°C for 5 hour for washing treatment and filtered to give purified pitch-coated graphite. Center particle diameter D50 of the purified pitch-coated graphite was determined as 19.3µm. Since center particle diameter D50 of graphite as core material was 18.9µm, a thickness of pitch layer is 0.2µm.

The covering ratio, specific surface area and true specific gravity of the purified pitch-coated graphite obtained are shown in table 1. Since quinoline soluble matter thereof was 10.6%, a covering ratio of the purified pitch-coated graphite is 0.106.

The purified pitch-coated graphite thus obtained was calcined at 1,000°C for 1 hour under nitrogen atmosphere (heating rate 25°C/hr) for carbonization. The specific surface area, true specific gravity, R value and volume-based integrated value of particles having a diameter of 1µm or less of the carbonized pitch-coated graphite obtained are shown in table 1. The results of determination of particle size distribution of the purified pitch-coated graphite indicated that the coated graphite had a distribution within 0.1-150 µm. The results of X-ray diffractometry thereof were similar to those of core material. Furthermore, comparison of R values between core material and carbonized pitch-coated graphite indicated that carbonized pitch, i.e., coat-forming carbon materials had lower crystallinity than core material. The results of SEM observation indicated that artifitial graphite as core material was coated with carbonized pitch, i.e., coat-forming carbon materials and that edge parts thereof were rounded.

A non-aqueous secondary battery was produced using, as an electrolytic solution, propylene carbonate in which 1 moldm⁻³ of LiClO₄ was dissolved and a negative electrode which was produced by using the carbonized pitch-coated graphite. The results of determination of charge and discharge properties thereof are shown in table 2.

### Example 18

50g of whisker artifitial graphite (center particle diameter D50 = 23.8µm; particle size distribution 0.1-150µm; d002=0.347nm; Lc=25nm; La=15nm; specific surface area = 13.5m²/g; R value = 0.68; true specific gravity = 1.60g/cm3) and 100g of coal tar pitch (softening point 80°C; quinoline insoluble matter = trace; toluene insoluble matter = 30%) whose primary QI was removed previously were added to a 1,000ml reaction flask. The mixture was stirred for 5 hours at 250°C under normal pressure to give crude pitch-coated graphite.

Toluene (3 parts) was added to the crude pitch-coated graphite thus obtained (1 part), and the mixture was stirred at 50°C for 5 hours for washing treatment and filtered to give purified pitch-coated graphite. Center particle diameter D50 of the purified pitch-coated graphite was determined as 24.2µm. Since center particle diameter D50 of graphite as core material was 23.8µm, a thickness of pitch layer is 0.2µm.

The covering ratio, specific surface area and true specific gravity of the purified pitch-coated graphite obtained are shown in table 1. Since quinoline soluble matter thereof was 13.1%, a covering ratio of the purified pitch-coated graphite is 0.131.

The purified pitch-coated graphite thus obtained was calcined at 1,000°C for 1 hour under nitrogen atmosphere (heating rate 25°C/hr) for carbonization. The specific surface area, true specific gravity, R value and volume-based integrated value of particles having a diameter of 1µm or less of the carbonized pitch-coated graphite obtained are shown in table 1. The results of determination of particle size distribution of the purified pitch-coated graphite indicated that the coated graphite had a distribution within 0.1-150 µm. The results of X-ray diffractometry thereof were similar to those of core material. Furthermore, comparison of R values between core material and carbonized pitch-coated graphite indicated that carbonized pitch, i.e., coat-forming carbon materials had lower crystallinity than core material. The results of SEM observation indicated that artifitial graphite as core material was coated with carbonized pitch, i.e., coat-forming carbon materials and that edge parts thereof were rounded.

A non-aqueous secondary battery was produced using, as an electrolytic solution, propylene carbonate in which 1 moldm⁻³ of LiClO₄ was dissolved and a negative electrode which was produced by using the carbonized pitch-coated graphite. The results of determination of charge and discharge properties thereof are shown in table 2.

### Example 19

50g of massive artifitial graphite (center particle diameter D50 = 7.5µm; particle size distribution 0.1-150µm; d002=0.336nm; Lc=100nm; La=97nm; specific surface area = 10.8m²/g; R value = 0.26; true specific gravity = 2.25g/cm³) and 100g of coal tar pitch (softening point 80°C; quinoline insoluble matter = trace; toluene insoluble matter = 30%) whose primary QI was removed previously were added to a 500ml reaction flask. The mixture was stirred for 1 hour at 300°C under normal pressure to give crude pitch-coated graphite.

Quinoline (0.1 part) was added to the crude pitch-coated graphite thus obtained (1 part), and the mixture was stirred at 150°C for 10 hours for washing treatment and filtered to give purified pitch-coated graphite. Center particle diameter D50 of the purified pitch-coated graphite was determined as 8.1µm. Since center particle diameter D50 of graphite as core material was 7.5µm, thickness of pitch layer is 0.3µm.

The covering ratio, specific surface area and true specific gravity of the purified pitch-coated graphite obtained are shown in table 1. Since quinoline soluble matter thereof was 29.0%, a covering ratio of the purified pitch-coated graphite is 0.290.

The purified pitch-coated graphite thus obtained was calcined at 1,000°C for 1 hour under nitrogen atmosphere (heating rate 100°C/hr) for carbonization. The specific surface area, true specific gravity, R value and volume-based integrated value of particles having a diameter of 1µm or less of the carbonized pitch-coated graphite obtained are shown in table 1. The results of determination of particle size distribution of the purified pitch-coated graphite indicated that the coated graphite had a distribution within 0.1-150 µm. The results of X-ray diffractometry thereof were similar to those of core material. Furthermore, comparison of R values between core material and carbonized pitch-coated graphite indicated that carbonized pitch, i.e., coat-forming carbon materials had lower crystallinity than core material. The results of SEM observation indicated that artifitial graphite as core material was coated with carbonized pitch, i.e., coat-forming carbon materials and that edge parts thereof were rounded.

A non-aqueous secondary battery was produced using, as an electrolytic solution, propylene carbonate in which 1 moldm⁻³ of LiClO₄ was dissolved and a negative electrode which was produced by using the carbonized pitch-coated graphite. The results of determination of charge and discharge properties thereof are shown in table 2.

### Example 20

25g of massive artifitial graphite (center particle diameter D50 = 7.5µm; particle size distribution 0.1-150µm; d002=0.336nm; Lc=100nm; La=97nm; specific surface area = 10.8m²/g; R value = 0.26; true specific gravity = 2.25g/cm³) and 50g of coal tar pitch (softening point 80°C; quinoline insoluble matter = trace; toluene insoluble matter = 30%) whose primary QI was removed previously were added to a 1,000ml reaction flask. The mixture was stirred for 3 hours at 30°C under normal pressure to give crude pitch-coated graphite.

Acetone (10 parts) was added to the crude pitch-coated graphite thus obtained (1 part), and the mixture was stirred at 30°C for 5 hours for washing treatment and filtered to give purified pitch-coated graphite. Center particle diameter D50 of the purified pitch-coated graphite was determined as 7.8µm. Since center particle diameter D50 of graphite as core material was 7.5µm, a thickness of pitch layer is 0.15µm.

The covering ratio, specific surface area and true specific gravity of the purified pitch-coated graphite obtained are shown in table 1. Since quinoline soluble matter thereof was 15.0%, a covering ratio of the purified pitch-coated graphite is 0.150.

The purified pitch-coated graphite thus obtained was calcined at 1,000°C for 1 hour under nitrogen atmosphere (heating rate 25°C/hr) for carbonization. The specific surface area, true specific gravity, R value and volume-based integrated value of particles having a diameter of 1µm or less of to the carbonized pitch-coated graphite obtained are shown in table 1. The results of determination of particle size distribution of the purified pitch-coated graphite indicated that the coated graphite had a distribution within 0.1-150 µm. The results of X-ray diffractometry thereof were similar to those of core material. Furthermore, comparison of R values between core material and carbonized pitch-coated graphite indicated that carbonized pitch, i.e., coat-forming carbon materials had lower crystallinity than core material. The results of SEM observation indicated that artifitial graphite as core material was coated with carbonized pitch, i.e., coat-forming carbon materials and that edge parts thereof were rounded.

A non-aqueous secondary battery was produced using, as an electrolytic solution, propylene carbonate in which 1 moldm⁻³ of LiClO₄ was dissolved and a negative electrode which was produced by using the carbonized pitch-coated graphite. The results of determination of charge and discharge properties thereof are shown in table 2.

### Example 21

50g of massive artifitial graphite (center particle diameter D50 = 7.5µm; particle size distribution 0.1-150µm; d002=0.336nm; Lc=100nm; La=97nm; specific surface area = 10.8m²/g; R value = 0.26; true specific gravity = 2.25g/cm³) and 50g of coal tar pitch (softening point 10°C; quinoline insoluble matter = trace; toluene insoluble matter = 8%) whose primary QI was removed previously were added to a 500ml reaction flask. The mixture was stirred for 3 hours at 250°C under normal pressure to give crude pitch-coated graphite.

Tar middle oil (10 parts) was added to the crude pitch-coated graphite thus obtained (1 part), and the mixture was stirred at 200°C for 1 hour for washing treatment and filtered to give purified pitch-coated graphite. Center particle diameter D50 of the purified pitch-coated graphite was determined as 7.5µm.

The covering ratio, specific surface area and true specific gravity of the purified pitch-coated graphite obtained are shown in table 1. Since quinoline soluble matter thereof was 2.0%, a covering ratio of the purified pitch-coated graphite is 0.020.

The purified pitch-coated graphite thus obtained was calcined at 1,000°C for 1 hour under nitrogen atmosphere (heating rate 25°C/hr) for carbonization. The specific surface area, true specific gravity, R value and volume-based integrated value of particles having a diameter of 1µm or less of the carbonized pitch-coated graphite obtained are shown in table 1. The results of determination of particle size distribution of the purified pitch-coated graphite indicated that the coated graphite had a distribution within 0.1-150 µm. The results of X-ray diffractometry thereof were similar to those of core material. Furthermore, comparison of R values between core material and carbonized pitch-coated graphite indicated that carbonized pitch, i.e., coat-forming carbon materials had lower crystallinity than core material. The results of SEM observation indicated that artifitial graphite as core material was coated with carbonized pitch, i.e., coat-forming carbon materials and that edge parts thereof were rounded.

A non-aqueous secondary battery was produced using, as an electrolytic solution, propylene carbonate in which 1 moldm⁻³ of LiClO₄ was dissolved and a negative electrode which was produced by using the carbonized pitch-coated graphite. The results of determination of charge and discharge properties thereof are shown in table 2.

### Example 22

50g of massive artifitial graphite (center particle diameter D50 = 7.5µm; particle size distribution 0.1-150µm; d002=0.336nm; Lc=100nm; La=97nm; specific surface area = 10.8m²/g; R value = 0.26; true specific gravity = 2.25g/cm³) and 100g of coal tar pitch (softening point 80°C; quinoline insoluble matter = trace; toluene insoluble matter = 8%) whose primary QI was removed previously were added to a 1,000ml reaction flask. The mixture was stirred for 3 hours at 250°C under normal pressure to give crude pitch-coated graphite.

Toluene (4 parts) was added to the crude pitch-coated graphite thus obtained (1 part), and the mixture was stirred at 80°C for 1 hour for washing treatment and filtered to give purified pitch-coated graphite. Center particle diameter D50 of the purified pitch-coated graphite was determined as 7.6µm. Since center particle diameter D50 of graphite as core material was 7.5µm, a thickness of pitch layer is 0.05µm.

The covering ratio, specific surface area and true specific gravity of the purified pitch-coated graphite obtained are shown in table 1. Since quinoline soluble matter thereof was 8.2%, a covering ratio of the purified pitch-coated graphite is 0.082.

The purified pitch-coated graphite thus obtained was calcined at 700°C for 1 hour under nitrogen atmosphere (heating rate 25°C/hr) for carbonization. The specific surface area, true specific gravity, R value and volume-based integrated value of particles having a diameter of 1µm or less of the carbonized pitch-coated graphite obtained are shown in table 1. The results of determination of particle size distribution of the purified pitch-coated graphite indicated that the coated graphite had a distribution within 0.1-150 µm. The results of X-ray diffractometry thereof were similar to those of core material. Furthermore, comparison of R values between core material and carbonized pitch-coated graphite indicated that carbonized pitch, i.e., coat-forming carbon materials had lower crystallinity than core material. The results of SEM observation indicated that artifitial graphite as core material was coated with carbonized pitch, i.e., coat-forming carbon materials and that edge parts thereof were rounded.

A non-aqueous secondary battery was produced using, as an electrolytic solution, propylene carbonate in which 1 moldm⁻³ of LiClO₄ was dissolved and a negative electrode which was produced by using the carbonized pitch-coated graphite. The results of determination of charge and discharge properties thereof are shown in table 2.

### Example 23

The purified pitch-coated graphite obtained according to example 22 was calcined at 1,500°C for 2 hour (heating rate 25°C/hr) for carbonization. The specific surface area, true specific gravity, R value and volume-based integrated value of particles having a diameter of 1µm or less of the resulting carbonized pitch-coated graphite are shown in table 1. The results of determination of particle size distribution of the carbonized pitch-coated graphite indicated that the coated graphite had a distribution within 0.1-150 µm as core material. The results of X-ray diffractometry thereof were similar to those of core material. Furthermore, comparison of R values between core material and carbonized pitch-coated graphite indicated that carbonized pitch, i.e., coat-forming carbon materials had lower crystallinity than core material. The results of SEM observation indicated that artifitial graphite as core material was coated with carbonized pitch, i.e., coat-forming carbon materials and that edge parts thereof were rounded.

A non-aqueous secondary battery was produced using, as an electrolytic solution, propylene carbonate in which 1 moldm⁻³ of LiClO₄ was dissolved and a negative electrode which was produced by using the carbonized pitch-coated graphite. The results of determination of charge and discharge properties thereof are shown in table 2.

### Example 24

50g of massive artifitial graphite (center particle diameter D50 = 7.5µm; particle size distribution 0.1-150µm; d002=0.336nm; Lc=100nm; La=97nm; specific surface area = 10.8m²/g; R value = 0.26; true specific gravity = 2.25g/cm³) and 100g of coal tar pitch (softening point 10°C; quinoline insoluble matter = 2.9%; toluene insoluble matter = 7.8%) whose primary QI was adjusted previously were added to a 1,000ml reaction flask. The mixture was stirred for 2 hours at 200°C under normal pressure to give crude pitch-coated graphite.

Toluene (4 parts) was added to the crude pitch-coated graphite thus obtained (1 part), and the mixture was stirred at 80°C for 1 hour for washing treatment and filtered to give purified pitch-coated graphite. Center particle diameter D50 of the purified pitch-coated graphite was determined as 7.6µm. Since center particle diameter D50 of graphite as core material was 7.5µm, a thickness of pitch layer is 0.05µm.

The covering ratio, specific surface area and true specific gravity of the purified pitch-coated graphite obtained are shown in table 1. Since quinoline soluble matter thereof was 8.7%, a covering ratio of the purified pitch-coated graphite is 0.087.

The purified pitch-coated graphite thus obtained was calcined at 1,000°C for 1 hour under nitrogen atmosphere (heating rate 25°C/hr) for carbonization. The specific surface area, true specific gravity, R value and volume-based integrated value of particles having a diameter of 1µm or less of the carbonized pitch-coated graphite obtained are shown in table 1. The results of determination of particle size distribution of the purified pitch-coated graphite indicated that the coated graphite had a distribution within 0.1-150 µm. The results of X-ray diffractometry thereof were similar to those of core material. Furthermore, comparison of R values between core material and carbonized pitch-coated graphite indicated that carbonized pitch, i.e., coat-forming carbon materials had lower crystallinity than core material. The results of SEM observation indicated that artifitial graphite as core material was coated with carbonized pitch, i.e., coat-forming carbon materials and that edge parts thereof were rounded.

A non-aqueous secondary battery was produced using, as an electrolytic solution, propylene carbonate in which 1 moldm⁻³ of LiClO₄ was dissolved and a negative electrode which was produced by using the carbonized pitch-coated graphite. The results of determination of charge and discharge properties thereof are shown in table 2.

### Comparative example 1

A non-aqueous secondary battery was produced using, as an electrolytic solution, propylene carbonate in which 1 moldm⁻³ of LiClO₄ was dissolved and a negative electrode which was produced by using massive artifitial graphite (center particle diameter D50 = 7.5µm; particle size distribution 0.1-150µm; d002=0.336nm; Lc=100nm; La=97nm; specific surface area = 10.8m²/g; R value = 0.26; true specific gravity = 2.25g/cm³).

However, the battery can hardly be charged and discharged due to decomposition of the electrolytic solution.

A covering ratio, specific surface area and true specific gravity of the purified pitch-coated graphite obtained are shown in table 1.

### Comparative example 2

A non-aqueous secondary battery was produced using, as an electrolytic solution, a mixed solvent of ethylene carbonate, diethyl carbonate and methylpropionate (3:3:4) in which 1 moldm⁻³ of LiClO₄ was dissolved and a negative electrode which was produced by using massive artifitial graphite (center particle diameter D50 = 7.5µm; particle size distribution 0.1-150µm; d002=0.336nm; Lc=100nm; La=97nm; specific surface area = 10.8m²/g; R value = 0.26; true specific gravity = 2.25g/cm³). The amount of generated gas of the graphite in the electrolytic solution was determined. The results of determination of charge and discharge properties and the amount of generated gas are shown in table 2.

### Comparative example 3

A negative electrode was produced by using massive artifitial graphite (center particle diameter D50 = 7.5µm; particle size distribution 0.1-150µm; d002=0.336nm; Lc=100nm; La=97nm; specific surface area = 10.8m²/g; R value = 0.26; true specific gravity = 2.25g/cm³). A solid electrolyte lithium secondary battery was then produced using the negative electrode. The results of determination of charge and discharge properties thereof are shown in table 3.

### Comparative example 4

A non-aqueous secondary battery was produced using, as an electrolytic solution, a mixed solvent of ethylene carbonate, diethyl carbonate and methylpropionate (3:3:4) in which 1 moldm⁻³ of LiClO₄ was dissolved and a negative electrode which was produced by using graphitized spheric mesocarbon microbeads ("MCMB-6-28" product of Osaka Gas Co., Ltd., center particle diameter D50 = 6.0µm; particle size distribution 0.1-50µm; d002=0.336nm; Lc=50nm; La=90nm; specific surface area = 3.0m²/g; R value = 0.42; true specific gravity = 2.20g/cm³). The results of determination of charge and discharge properties thereof are shown in table 2.

### Comparative example 5

50g of massive artifitial graphite (center particle diameter D50 = 7.5µm; particle size distribution 0.1-150µm; d002=0.336nm; Lc=100nm; La=97nm; specific surface area = 10.8m²/g; R value = 0.26; true specific gravity = 2.25g/cm³) and 100g of coal tar pitch (softening point 80°C; quinoline insoluble matter = trace; toluene insoluble matter = 30%) whose primary QI was removed previously were added to a 1,000ml reaction flask. The mixture was stirred for 2 hours at 200°C under normal pressure to give crude pitch-coated graphite.

The crude pitch-coated graphite thus obtained was calcined at 1,000°C for 1 hour under nitrogen atmosphere (heating rate 25°C/hr) for carbonization without washing the crude pitch-coated graphite with organic solvents. After calcination, the artifitial graphite powder was taken out as lump. The lump of carbon material was grinded with a coffee mill to obtain carbon material powders. The specific surface area, true specific gravity, R value and volume-based integrated value of particles having a diameter of 1µm or less of the obtained carbon materials are shown in table 1. The results indicate small R value thereof. The SEM observation demonstrates that the carbon materials has an angular shape in the carbon materials produced according to the method of the invention. The angular shape seems to result from exposure of graphite face caused by grinding.

A non-aqueous secondary battery was produced using, as an electrolytic solution, propylene carbonate in which 1 moldm⁻³ of LiClO₄ was dissolved and a negative electrode which was produced by using the carbon materials. The results of determination of charge and discharge properties thereof are shown in table 2.

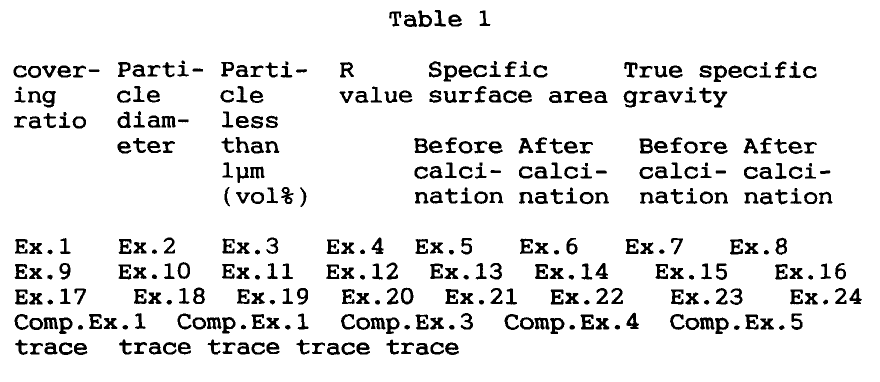

**Table 2**

| | Discharge capacity (mAh/g) | Efficiency of charge and discharge(%) | Generated gas (ml/g) |
|---|---|---|---|
| Example 1 | 355 | 83.4 | - |
| Example 2 | 370 | 86.0 | - |
| Example 3 | 343 | 86.2 | 2.2 |
| Example 4 | 346 | 85.9 | - |
| Example 5 | 349 | 86.1 | - |
| Example 6 | 359 | 85.3 | - |
| Example 7 | 342 | 85.5 | - |
| Example 8 | 334 | 90.5 | 1.7 |
| Example 9 | 348 | 87.8 | - |
| Example 10 | 351 | 84.2 | - |
| Example 11 | 344 | 89.5 | - |
| Example 12 | 339 | 82.4 | - |
| Example 13 | 342 | 90.1 | - |
| Example 14 | 334 | 90.5 | - |
| Example 15 | 330 | 82.5 | - |
| Example 16 | 316 | 82.1 | - |
| Example 17 | 310 | 87.6 | - |
| Example 18 | 303 | 88.7 | - |
| Example 19 | 331 | 88.6 | - |
| Example 20 | 340 | 82.7 | - |
| Example 21 | 357 | 80.6 | - |
| Example 22 | 321 | 83.0 | - |
| Example 23 | 359 | 80.4 | - |
| Example 24 | 350 | 82.8 | - |
| Comp.Ex.1 | Determination is impossible due to decomposition of solvent | | |
| Comp.Ex.2 | 224 | 51.0 | 15.0 |
| Comp.Ex.4 | 303 | 90.2 | - |
| Comp.Ex.5 | 302 | 68.1 | - |

**Table 3**

| | Discharge capacity (mAh/g) | Efficiency of Charge and Discharge(%) |
|---|---|---|
| Ex. 1 | 350 | 83.1 |
| Comp.ex. 3 | 210 | 49.0 |

As shown in table 1, coating a graphite surface by pitch or tar can reduce specific surface area thereof. The specific surface area is further reduced by calcination of the coated graphite.

As shown in table 2, coating a graphite surface with pitch or tar greatly improves discharge capacity and efficiency of charge and discharge of non-aqueous lithium secondary battery. Coating a graphite surface by pitch inhibits a reactivity of the graphite to the electrolytic solution and reduces the amount of generated gas.

As shown in table 3, discharge capacity and efficiency of charge and discharge of battery may be greatly improved by coating a graphite surface with pitch or tar with resprct to solid electrolyte lithium secondary battery.

## Claims

1. A carbon material characterized in that edge parts of a core carbon material are partially or entirely coated with a coat-forming carbon material and that the carbon material is nearly spheric or ellipsoidal.

2. The carbon material according to claim 1 wherein the carbon material has a specific surface area determined by a BET method of 5m²/g or less.

3. The carbon material according to claim 1 or 2 wherein the coat-forming carbon material has a lower crystallinity than the core carbon material.

4. The carbon material according to claims 1-3 wherein the core carbon material is a carbon material with high crystalllinity having a mean interplanar spacing (d002) of (002) plane of 0.335-0.340 nm, a thickness of crystallite size in direction of (002) plane (Lc) of at least 10nm, a thickness of crystallite size in direction of (110) plane (La) of at least 10 nm.

5. The carbon material according to claims 1-4 wherein a true specific gravity of entire carbon material is 1.50 to 2.26g/cm³.

6. The carbon material according to claims 1-5 wherein a volume-based integrated value of particles having a diameter of 1µm or less determined by particle size distribution is 10% or less.

7. A method for producing a carbon material having a coating layer on the surface characterized in that the method comprises dipping a core carbon material into a coat-forming carbon material, separating the core carbon material from the coat-forming carbon material, adding organic solvent or solvents to the separated core carbon material which is subjected to washing and drying.

8. The method for producing a coated carbon material according to claim 7, wherein the core carbon material is dipped into the coat-forming carbon material at 10-300°C.

9. The method for producing a coated carbon material according to claim 7 or 8, wherein the separated core carbon material to which organic solvent or solvents are added is washed at 10-300°C.

10. The method for producing a coated carbon material according to any of claims 7-9, wherein the core carbon material is dipped into the coat-forming carbon material under reduced pressure.

11. The method for producing a coated carbon material according to any of claims 7-10, wherein the coat-forming carbon material is coal heavy oil or petroleum heavy oil.

12. The method for producing a coated carbon material according to any of claims 7-11, wherein the coat-forming carbon material is tar and/or pitch.

13. The method for producing a coated carbon material according to any of claims 7-12, wherein the organic solvent or solvents used for washing are at least one selected from toluene, quinoline, acetone, hexane, benzene, xylene, methylnaphthalene, alcohols, oils from coal and petroleum.

14. The method for producing a coated carbon material according to any of claims 7-13, wherein a ratio of solid matter and organic solvent during washing is 1:0.1-10 by weight.

15. The method for producing a coated carbon material according to any of claims 7-14, wherein a covering ratio (c) defined as weight ratio of coat-forming carbon material/(core carbon material + coat-forming carbon material) is 0<c≤0.3.

16. The method for producing a coated carbon material according to any of claims 7-15, wherein the coat-forming carbon material has primary QI at least part of which is removed to reduce a primary QI content of 3% or less.

17. A method for producing a two-layer carbon material characterized in that the coated carbon material produced according to any of claims 7-16 is calcined for carbonization.

18. A method for producing a two-layer carbon material characterized in that the coated carbon material produced according to any of claims 7-16 is calcined for carbonization at a heating rate of up to 10°C/hr.

19. A method for producing a two-layer carbon material characterized in that the coated carbon material produced according to any of claims 7-16 is calcined for carbonization in vacuo.

20. A method for producing a two-layer carbon material characterized in that the coated carbon material produced according to any of claims 7-16 is calcined for graphitization.

21. A method for producing a two-layer carbon material according to any of claims 17-20, wherein a surface of the coated carbon material is pretreated for oxidation before calcination of the coated carbon material.

22. A lithium secondary battery comprising the carbon material according to any of claims 1-6.

23. A lithium secondary battery comprising the carbon material according to any of claims 1-6 as matrial for negative electrode.

24. The lithium secondary battery according to claim 22 or 23, wherein the lithium secondary battery is a non-aqueous lithium secondary battery.

25. The lithium secondary battery according to claim 24, wherein the lithium secondary battery is a solid electrolyte lithium secondary battery.

## Amended claims

### Amended claims under Art. 19.1 PCT

1. A carbon material characterized in that edge parts of a core carbon material are partially or entirely coated with a coat-forming carbon material and that the carbon material is nearly spheric or ellipsoidal.
2. The carbon material according to claim 1 wherein the carbon material has a specific surface area determined by a BET method of 5m²/g or less.
3. The carbon material according to claim 1 or 2 wherein the coating carbon material has a lower crystallinity than the core carbon material.
4. The carbon material according to any of claims 1-3 wherein the core carbon material is a carbon material with high crystalllinity having a mean interplanar spacing (d002) of (002) plane of 0.335-0.340 nm, a thickness of crystallite size in direction of (002) plane (Lc) of at least 10nm, a thickness of crystallite size in direction of (110) plane (La) of at least 10 nm.
5. The carbon material according to any of claims 1-4 wherein a true specific gravity of entire carbon material is 1.50 to 2.26g/cm³.
6. The carbon material according to any of claims 1-5 wherein a volume-based integrated value of particles having a diameter of 1µm or less determined by particle size distribution is 10% or less.
7. A method for producing a coated carbon material having a coating layer on the surface characterized in that the method comprises dipping a core carbon material having higher crystallinity than a coat-forming carbon material into the coat-forming carbon material, separating the core carbon material from the coat-forming carbon material, adding organic solvent or solvents to the separated core carbon material which is subjected to washing and drying.
8. A method for producing a carbon material having a coating layer on the surface characterized in that the method comprises dipping a core carbon material into a coat-forming carbon material at 10-300°C, separating the core carbon material from the coat-forming carbon material, adding organic solvent or solvents to the separated core carbon material which is subjected to washing and drying.
9. The method for producing a coated carbon material according to claim 7 or 8, wherein the separated core carbon material to which the organic solvent or solvents are added is washed at 10-300°C.
10. The method for producing a coated carbon material according to any of claims 7-9, wherein the core carbon material is dipped into the coat-forming carbon material under reduced pressure.
11. The method for producing a coated carbon material according to any of claims 7-10, wherein the coat-forming carbon material is coal heavy oil or petroleum heavy oil.
12. The method for producing a coated carbon material according to any of claims 7-11, wherein the coat-forming carbon material is tar or pitch.
13. The method for producing a coated carbon material according to any of claims 7-12, wherein the organic solvents used for washing are at least one selected from toluene, quinoline, acetone, hexane, benzene, xylene, methylnaphthalene, alcohols, oils from coal and petroleum.
14. The method for producing a coated carbon material according to any of claims 7-13, wherein a ratio of solid matter and organic solvent or solvents during washing is 1:0.1-10 by weight.
15. The method for producing a coated carbon material according to any of claims 7-14, wherein a covering ratio (c) defined as weight ratio of coat-forming carbon material/(core carbon material + coat-forming carbon material) is 0<c≤0.3.
16. The method for producing a coated carbon material according to any of claims 7-15, wherein the coat-forming carbon material has primary QI at least part of which is removed to reduce a primary QI content of 3% or less.
17. A method for producing a two-layer carbon material characterized in that the coated carbon material produced according to any of claims 7-16 is calcined for carbonization.
18. A method for producing a two-layer carbon material characterized in that the coated carbon material produced according to any of claims 7-16 is calcined for carbonization at a heating rate of up to 10°C/hr.
19. A method for producing a two-layer carbon material characterized in that the coated carbon material produced according to any of claims 7-16 is calcined for carbonization in vacuo.
20. A method for producing a two-layer carbon material characterized in that the coated carbon material produced according to any of claims 7-16 is calcined for graphitization.
21. A method for producing a two-layer carbon material according to any of claims 17-20, wherein a surface of the coated carbon material is pretreated for oxidation before calcination of the coated carbon material.
22. A lithium secondary battery comprising carbon material according to any of claims 1-6.
23. A lithium secondary battery comprising carbon material according to any of claims 1-6 as matrial for negative electrode.
24. The lithium secondary battery according to claim 22 or 23, wherein the lithium secondary battery is a non-aqueous lithium secondary battery.
25. The lithium secondary battery according to claim 24, wherein the lithium secondary battery is a solid electrolyte lithium secondary battery.
26. A method for producing a carbon material having a coating layer on the surface characterized in that the method comprises dipping a core carbon material into a coat-forming carbon material whose primary QI content is adjusted to 3% or less by removing primary QI previously, separating the core carbon material from the coat-forming carbon material, adding an organic solvent to the separated core carbon material which is subjected to washing and drying.
27. A method for producing a coated carbon material characterized in that the coated carbon material produced according to claim 26 is calcined for carbonization.
28. A method for producing a two-layer carbon material characterized in that the coated carbon material produced according to claim 26 is calcined for carbonization at a heating rate of up to 10°C/hr.
29. A method for producing a two-layer carbon material characterized in that the coated carbon material produced according to claim 26 is calcined for carbonization in vacuo.
30. A method for producing a two-layer carbon material characterized in that the coated carbon material produced according to claims 26 is calcined for graphitization.
31. A method for producing a two-layer carbon material according to any of claims 26-30, wherein a surface of the coated carbon material is pretreated for oxidation before calcination of the coated carbon material.
